(19) Europäisches Patentamt

European Patent Office

Office européen des brevets

(11) **EP 1 007 384 B1**

(12) **EUROPÄISCHE PATENTSCHRIFT**

(45) Veröffentlichungstag und Bekanntmachung des Hinweises auf die Patenterteilung:
**09.05.2001 Patentblatt 2001/19**

(21) Anmeldenummer: **98949967.8**

(22) Anmeldetag: **24.08.1998**

(51) Int Cl.[7]: **B60K 31/00**, G01S 13/93, G08G 1/16

(86) Internationale Anmeldenummer:
**PCT/EP98/05359**

(87) Internationale Veröffentlichungsnummer:
**WO 99/10193 (04.03.1999 Gazette 1999/09)**

(54) **VERFAHREN UND ANORDNUNG ZUR BESTIMMUNG EINES REGELOBJEKTES**

METHOD AND SYSTEM FOR DETERMINING A TARGET VEHICLE

PROCEDE ET DISPOSITIF PERMETTANT DE DEFINIR UN OBJET REGULATEUR

(84) Benannte Vertragsstaaten:
**DE FR GB**

(30) Priorität: **25.08.1997 DE 19736968**
**06.08.1998 DE 19835518**

(43) Veröffentlichungstag der Anmeldung:
**14.06.2000 Patentblatt 2000/24**

(73) Patentinhaber: **Mannesmann VDO Aktiengesellschaft**
**60388 Frankfurt am Main (DE)**

(72) Erfinder: **LANDSIEDEL, Thomas**
**D-85084 Reichertshofen (DE)**

(74) Vertreter: **Rassler, Andrea, Dipl.-Phys.**
**Kruppstrasse 105**
**60388 Frankfurt (DE)**

(56) Entgegenhaltungen:
**EP-A- 0 657 857        DE-A- 19 637 245**
**US-A- 5 572 428**

# Beschreibung

Die Erfindung betrifft ein Verfahren zur Bestimmung eines Regelobjektes, dessen Abstand zu einem nachfolgenden Fahrzeug gemessen wird, wobei der Abstand zwischen dem Regelobjekt und einem nachfolgenden Fahrzeug auf einen Sollabstand eingeregelt wird, wenn sich das Regelobjekt in einem voraussichtlichen Fahrkorridor des nachfolgenden Fahrzeuges befindet und eine Anordnung zur Durchführung des Verfahrens.

In automatischen Geschwindigkeits- und Abstandsregelsystemen zur Erfassung der Verkehrssituation ist es üblich, mit Hilfe von Signalen von Gierratensensoren bzw. Querbeschleunigungssensoren einen Fahrkorridor des Kraftfahrzeuges vorauszusagen. D. h. es wird festgestellt, an welcher Stelle sich das Fahrzeug nach Ablauf eines vorgegebenen Zeitraumes aufhalten wird und welche vorausfahrenden Fahrzeuge sich im Fahrkorridor des eigenen Fahrzeuges aufhalten.

Für das abstandsgeregelte Fahren wird anhand der vom Radar ermittelten Objekte und aus dem berechneten Fahrkorridor das Regelobjekt ermittelt. Dieses Objekt wird von einer Abstandsregeleinrichtung in Form eines Längsreglers zum Abstandsregeln verwendet. Das Fahrzeug, das sich als nächstes in dem prädizierten Fahrkorridor aufhält, wird als das Regelobjekt erkannt.

Der Fahrkorridor ist dabei eine Annahme in die Zukunft, bei welcher das Fahrzeug in die Richtung fährt, die durch den ermittelten Radius vorgegeben wird. Verläßt dieses Regelobjekt nun den vorausgesagten Fahrkorridor, so wird es nicht weiter als Regelobjekt erkannt.

Das gilt auch für Grenzsituationen wie Kurvenfahrten oder Schlingern des Fahrzeuges.

Dokument US-A-5 572 428 offenbart ein Verfahren mit den Merkmalen des Oberbegriffs des Anspruchs 1.

Der Erfindung liegt somit die Aufgabe zugrunde, ein Verfahren zur zuverlässigen Bestimmung des Regelobjektes anzugeben, das auch bei kurzfristigen und plötzlichen Änderungen des Fahrkorridors des Fahrzeuges eine zuverlässige Abstandsregelung zuläßt.

Erfindungsgemäß wird die Aufgabe durch die Merkmale der unabhängigen Ansprüche 1 und 11 gelöst. Auch nach Verlassen des Fahrkorridors durch das Regelobjekt wird der Abstand auf dieses Regelobjekt geregelt, solange sich das Regelobjekt in einem Objektkorridor aufhält, welcher breiter ist als der Fahrkorridor des Fahrzeuges.

Der Vorteil der Erfindung besteht darin, daß auch bei leichtem Pendeln des Fahrkorridors, bei Radienänderung der Fahrbahn, versetztem Fahren der Fahrzeuge innerhalb einer Fahrspur, die zur Änderung des vorausgesagten Fahrkorridors führen, das Regelobjekt auch weiterhin zuverlässig erkannt werden kann.

Dies gilt insbesondere auch bei Kurvenfahrten und Schlingern des Fahrzeuges. Der Fahrkorridor des zu regelnden Fahrzeuges dient dabei als Auffangkorridor für das Regelobjekt, während der, den Fahrkorridor überdeckende Objektkorridor als Auslaßkorridor des Regelobjektes genutzt wird. Zur Ermittlung des Regelobjektes wird somit ein schmalerer Korridor (Fahrkorridor) genutzt, während ein neues weiteres Regelobjekt erst ermittelt wird, wenn sich das bisherige Regelobjekt außerhalb des Objektkorridors befindet.

Vorteilhafterweise ist die Breite des Objektkorridor des Fahrzeuges entfernungsabhängig gewählt. Dabei erscheint es als günstig, daß für Regelobjekte, die sich nahe des zu regelnden Fahrzeuges befinden der Objektkorridor kleiner gewählt ist, als für Objekte die sich weiter vom zu regelnden Fahrzeug entfernt aufhalten.

In einer Weiterbildung ist der Objektkorridor des Fahrzeuges so breit wie eine Fahrbahnbreite der Fahrbahn, auf welcher sich das zu regelnde Fahrzeug bewegt. Üblicherweise ist der Fahrkorridor immer schmaler als die Fahrbahn des Fahrzeuges. Er muß aber mindestens immer so breit wie der Radabstand zweier Räder einer Fahrzeugachse des Fahrzeuges sein.

Der Objektkorridor kann somit auf unterschiedliche Straßensituationen eingestellt werden, je nachdem ob man sich auf einer Landstraße oder einer Autobahn bewegt.

Zur Bestimmung des Regelobjektes überwacht das zu regelnde Fahrzeug andere vorausfahrende Fahrzeuge drahtlos und wählt aus den Fahrzeugen, welche sich in seinem Fahrkorridor befinden, das Fahrzeug mit dem geringsten Abstand zum zu regelnden Fahrzeug aus, welches als Regelobjekt erkannt wird.

In einer Ausgestaltung ist der Objektkorridor aus dem Fahrkorridor des zu regelnden Fahrzeuges ableitbar. Damit ist sichergestellt, daß sich Objektkorridor und Fahrkorridor des zu regelnden Fahrzeuges immer auf denselben Fahrzeugbezugspunkt beziehen.

In einer Weiterbildung wird der Fahrkorridor des Fahrzeuges aus der von einem Gierratensensor gemessenen Gierrate des Fahrzeuges bestimmt.

Alternativ dazu wird der Fahrkorridor des Fahrzeuges über den Kurvenradius bestimmt, der aus der Differenzgeschwindigkeit zweier Fahrzeugräder, insbesondere der Räder einer Achse bestimmt wird.

Dies hat den Vorteil, daß durch die Messung der Radgeschwindigkeiten der tatsächliche Geschwindigkeitsunterschied an beiden Fahrzeugrädern in die Bestimmung des Fahrkorridors eingeht. Dieser kann somit sehr genau bestimmt werden, da die Fahrdynamik auf diese Art und Weise direkt berücksichtigt wird.

Vorteilhafterweise wird die Radgeschwindigkeit der beiden Fahrzeugräder gemessen und aus der Differenz der beiden Radgeschwindigkeiten die Gierrate des Fahrzeuges bestimmt.

Bei einer Anordnung zur Durchführung des Verfahrens ist ein Sensor, der in Fahrtrichtung des Fahrzeugs auftretende Objekte erfaßt, mit einer Sensorsignalaufbereitungsanordnung verbunden, die Abstand und Relativgeschwindigkeit der überwachten Objekte an eine Regeleinrichtung führt, welche den Objektkorridor des Fahrzeuges bestimmt.

Die erfindungsgemäße Anordnung ermöglicht somit auf einfache Art und Weise die Ermittlung der Objektspur. Es sind keine weiteren zusätzlichen Einrichtungen notwendig.

In einer Ausgestaltung ist der Sensor an der Vorderfront des zu regelnden Fahrzeuges zur Erfassung der vorausfahrenden Fahrzeuge angeordnet. Der Sensor arbeitet nach dem Rückstrahlprinzip und ist vorteilhafterweise ein Radarsensor.

In einer Ausgestaltung bestimmt die Regeleinrichtung den Fahrkorridor des Fahrzeuges und stellt den Abstand zum Regelobjekt ein.

Somit wird eine platzsparende Sensoreinheit ermöglicht, welche nur unwesentlich mehr Bauraum beansprucht als der Sensor mit integrierter Signalauswerteschaltung.

Die Erfindung läßt zahlreiche Ausführungsbeispiele zu. Eines soll anhand der in den Figuren dargestellten Zeichnung näher erläutert werden.

Es zeigen:

Figur 1: Anordnung des Abstandsregelsystems an Kraftfahrzeugen,

Figur 2: prinzipieller Aufbau des Abstandsregelsystems,

Figur 3: Anordnung zur Bestimmung des Fahrkorridors des Kraftfahrzeuges,

Figur 4: Erfassung des Regelobjektes,

Figur 5: ein mit der Anordnung gemäß Figur 1 durchgeführtes Verfahren zur Bestimmung des Regelobjektes.

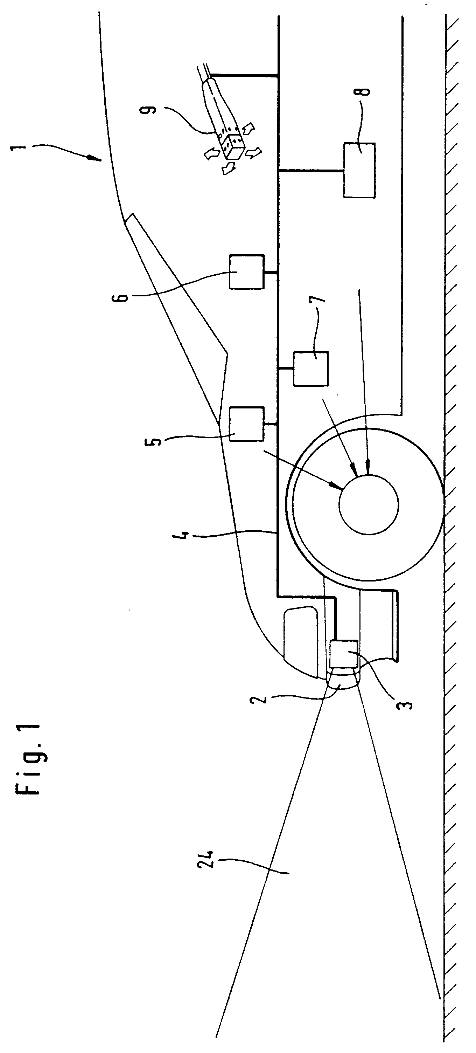

In Figur 1 ist an der Stoßstange 2 eines Kraftfahrzeuges 1 ein automatisches Geschwindigkeits- und Abstandsregelsystem 3 zur Einhaltung des Sicherheitsabstandes von Fahrzeugen angeordnet. Bei Annäherung des geregelten Fahrzeuges an ein langsameres Fahrzeug wird automatisch der Abstand und die Geschwindigkeit zum vorausfahrenden Fahrzeug reguliert. Ist der Fahrkorridor wieder frei, beschleunigt das System das Fahrzeug auf die zuvor eingestellte Wunschgeschwindigkeit.

Das Ein-/Ausschalten des Geschwindigkeits- und Abstandsregelsystems 3 erfolgt per Bedienhebel 9. Auch die Wunschgeschwindigkeit des Fahrzeuges wird mit Hilfe des Bedienhebels 9 eingestellt. Die vom Fahrer gewünschte Reisegeschwindigkeit wird so gespeichert, erhöht oder verringert.

Über ein Bussystem 4 ist das automatische Geschwindigkeits- und Abstandsregelsystem 3 mit der Motorsteuerung 5, der Bremse 7 und dem Getriebe 8 verbunden. Elektronische Befehle regulieren den Abstand und die Geschwindigkeit zum vorausfahrenden Fahrzeug. Über eine Anzeigeeinheit 6, die ebenfalls von dem "Geschwindigkeits- und Abstandsregelsystem" 3 über das Bussystem 4, vorzugsweise einem CAN-Bus, angesteuert wird, wird die aktuelle Geschwindigkeit und auch der Abstand zum vorausfahrenden Fahrzeug angezeigt.

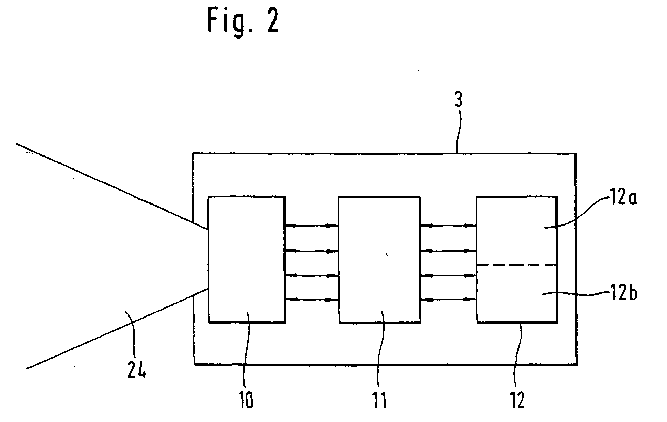

Wie in Figur 2 dargestellt, bildet das automatische Geschwindigkeits- und Abstandsregelsystem 3 eine bauliche Einheit zwischen Sensor 10, Sensorsignalaufbereitungsanordnung 11 und einer Abstandsregeleinrichtung 12.

Das Abstandsregeleinrichtung 12 weist dabei eine Einrichtung 12a zur Bestimmung des Fahr- und Objektkorridors des Fahrzeuges 1 sowie einen Längsregler 12b auf, der den Abstand zu einem Regelobjekt herstellt.

Der Sensor 10 ist dabei ein Radar- oder Lasersensor, der in regelmäßigen Abständen, z. B. alle 60 ms in Fahrtrichtung des Fahrzeuges Signale aussendet, welche von den Fahrzeugen, die sich im Signalstrahl befinden, reflektiert werden. Aus diesen zurückgesendeten Signalen wird von der Signalaufbereitungsschaltung 11 der Abstand und die Relativgeschwindigkeit der vorausfahrenden Fahrzeuge bestimmt. Diese Meßergebnisse werden von der Signalaufbereitungsanordnung 11 an das Abstandsregeleinrichtung 12 weitergegeben.

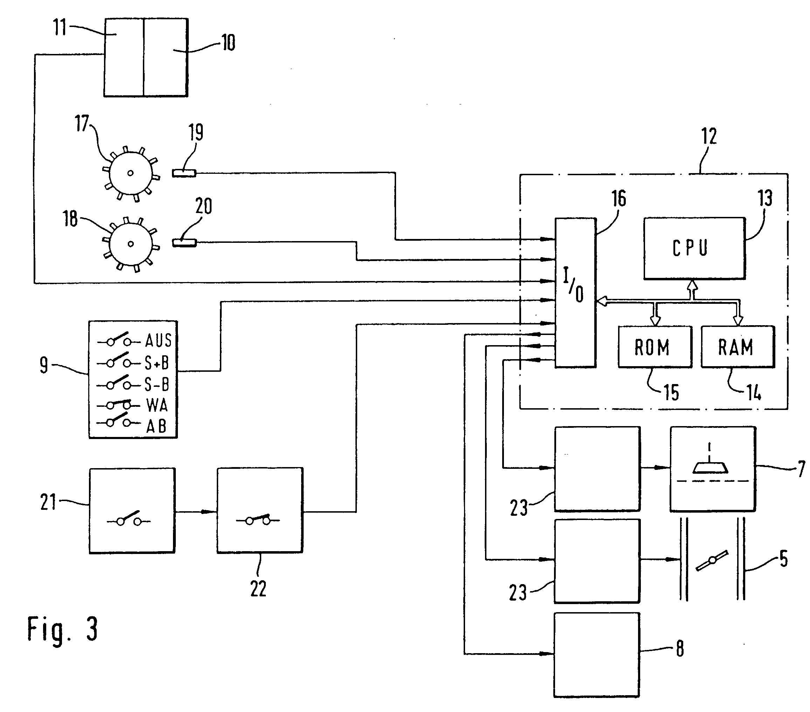

Wie in Figur 3 dargestellt, besteht die Abstandsregeleinrichtung 12 aus einem leistungsstarken Mikrorechner, der wiederum aus einer zentralen Recheneinheit 13, einem Arbeitsspeicher 14, einem Festwertspeicher 15 sowie einer Ein-/Ausgabeeinheit 16 aufgebaut ist. Die Ein-/Ausgabeeinheit 16 erhält dabei von der Sensorsignalaufbereitungsanordnung 11, wie schon beschrieben, die Informationen über den Abstand und die Relativgeschwindigkeit der vorausfahrenden Fahrzeuge. Die Aufgaben der Fahrkorridor- und Objektkorridorbestimmung sowie der Längsregelung werden von diesem Mikrorechner übernommen.

Am Fahrzeug selbst sind Inkrementscheiben 17 und 18 an den jeweils beiden nicht weiter dargestellten Vorderrädern angeordnet. Den Inkrementscheiben 17, 18 gegenüberliegend sind Drehzahlsensoren 19, 20 angeordnet. Die von den Drehzahlsensoren 19, 20 detektierten Drehzahlsignale werden ebenfalls über die Ein-/Ausgabeeinheit 16 dem Mikrorechner der Abstandsregeleinrichtung 12 zugeführt. Der Mikrorechner der Abstandsregeleinrichtung 12 berechnet aus dem vom Sensor 10 gelieferten Signalen (Abstandssignal und Relativgeschwindigkeitssignal) und mit Hilfe der Radgeschwindigkeiten die Geschwindigkeitsdifferenz zwischen beiden Fahrzeugen und ermittelt aus diesen den sicheren Mindestabstand. Wird dieser unterschritten, warnt das System bei aktivierter Warnfunktion den Fahrer.

Ist der Abstandsbetrieb vom Fahrer eingeschaltet, wird der Abstand zum vorausfahrenden Fahrzeug automatisch auf einen wählbaren Abstand eingeregelt. Per Tastendruck auf den Bedienschalter 9 wird, wie bereits erläutert, eine gewünschte Geschwindigkeit und/oder der gewünschte Abstand eingestellt und gespeichert und vom System aufrechterhalten.

Bei Annäherung an ein langsameres Fahrzeug übernimmt der Mikrorechner der Abstandsregeleinrichtung 12 durch automatisches Schließen der Drosselklappe 5 eine Verringerung der Fahrzeuggeschwindigkeit und regelt so den eingestellten Sollabstand zum vorausfahrenden Fahrzeug, wobei der Sollabstand immer größer/gleich dem gesetzlich vorgegebenen Sicherheitsabstand ist. Neben dem automatischen Schließen der Drosselklappe 5 ist auch eine Einwirkung auf die Bremse 7 und/oder eine Ansteuerung der Getriebesteuerung 8 zur Verringerung der Fahrgeschwindigkeit möglich. Die Ansteuerung der Drosselklappe 5, der Bremse 7 oder des Getriebes 8 erfolgt dabei über je eine elektrische Endstufe 23. Ist der Fahrkorridor wieder frei, beschleunigt der Abstandsregler 12 das Fahrzeug auf die eingestellte Maximalgeschwindigkeit. Bei einer Fahrzeugvorausfahrt ist immer die Abstandsregelung aktiv.

Weiterhin ist der Mikrorechner der Abstandsregeleinrichtung 12 mit Schaltern der Fahrzeugbremse 21 bzw. der Fahrzeugkupplung 22 verbunden. Werden diese vom Fahrer über das Kupplungs- und Bremspedal betätigt, bewirken sie im Normalbetrieb ein Abschalten der Regelung.

Im Mikroprozessor der Abstandsregeleinrichtung 12 bildet der Längsregler 12b den Vergleich zwischen einem Soll- und Istwert eines in der Software abgelegten Regelungskonzeptes. Ist man im Regelbereich, so wird vom Mikrorechner ein Ausgangssignal ausgegeben, das vom Regelungskonzept ermittelt wird.

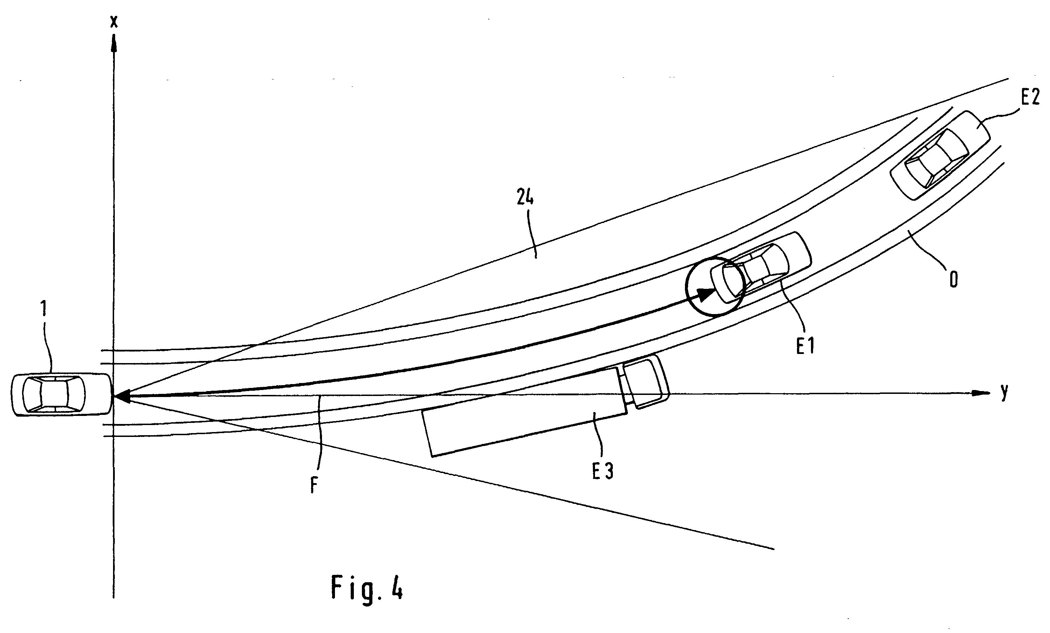

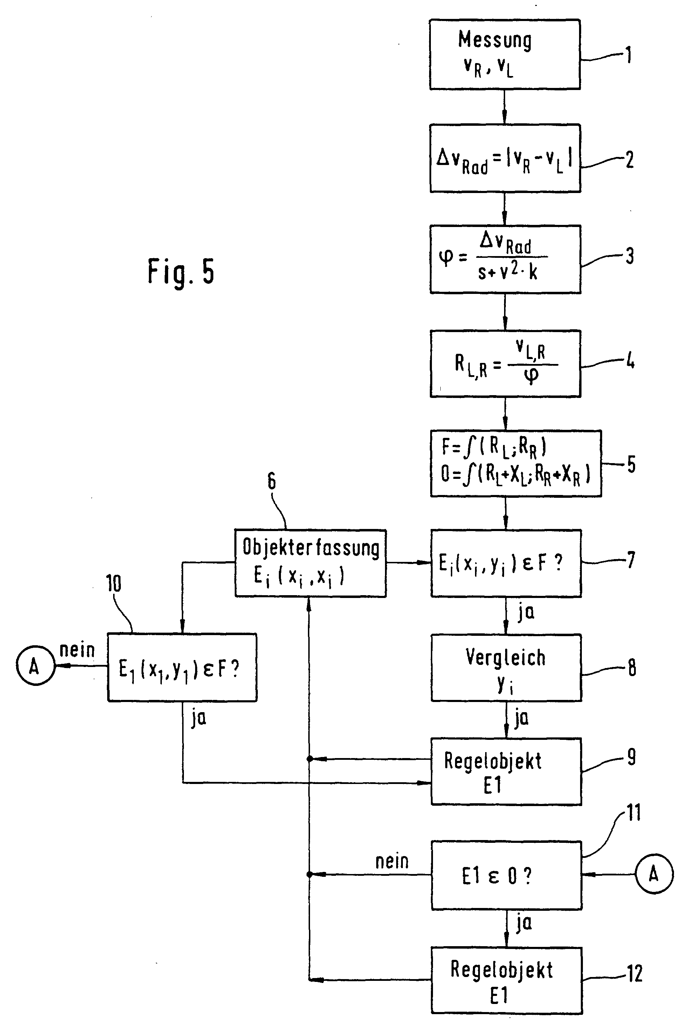

Die Bestimmung des Regelobjektes soll nun anhand von Figur 4 und 5 näher erläutert werden.

Aus den von den Drehzahlsensoren 19, 20 erfaßten Drehzahlsignalen (Schritt 1 - Figur 5) ermittelt die im Mikroprozessor der Abstandsregeleinrichtung 12 gebildete Einrichtung zur Fahr- und Objektkorridorbestimmung 12a die Gierrate des Kraftfahrzeuges (Schritt 2 und 3).

Die Gierrate bestimmt sich wie folgt:

$$\dot{\varphi} = \frac{\Delta \, v_{VR}}{s + v^2 \cdot k}$$

wobei

$\Delta v_{VR}$    die Geschwindigkeitsdifferenz der Vorderräder des Kraftfahrzeuges,

s      die Spurbreite zwischen den Vorderrädern,

v      die Fahrzeuggeschwindigkeit,

k      der Dynamikkorrekturfaktor ist.

Mit Hilfe der so bestimmten Gierrate wird nun der Fahrkorridor F des Kraftfahrzeuges 1 aus dem Kurvenradius

$$R = \frac{v_R}{\dot{\varphi}}$$

berechnet (Schritt 4).

Der von jedem Vorderrad gefahrene Radius bestimmt sich aus dem Quotienten der Radgeschwindigkeit $v_R$ durch die Gierrate $\dot{\varphi}$.

Im Schritt 5 wird der Fahrkorridor F als Funktion der Radien des rechten Vorderrades $R_R$ und des linken Vorderrades $R_L$ gebildet. Gleichzeitig wird der Objektkorridor O als Funktion des rechten und des linken Vorderrades gebildet, wobei die Spur aber verbreitert ist, so daß der Objektkorridor gebildet wird als Funktion von $R_L + X_L$, $R_R + X_R$.

In Schritt 6 erfaßt das Fahrzeug 1 mit Hilfe des ausgesendeten Radarstrahles 24 mehrere Fahrzeuge E1, E2, E3 (vgl. Figur 4). Die Sensorauswerteelektronik 11 ermittelt von diesen drei Objekten E1, E2, E3 den Abstand zum zu regelnden Fahrzeug 1 in Form der Positionskoordinaten x, y und die Relativgeschwindigkeit jedes Fahrzeuges zum Kraftfahrzeug 1. Weiterhin wird überwacht, ob das detektierte Objekt E1, E2, E3 bei jeder Messung wieder vom Radarstrahl 24 erfaßt wird.

Zur Vereinfachung wurde in der Figur 4 ein Koordinatensystem dargestellt, dessen Nullpunkt sich in der Mitte der Vorderfront des Kraftfahrzeuges 1 befindet. An dieser Stelle befindet sich der Radarsensor. Das Objekt E1 weist die Koordinaten $x_1$, $y_1$, das Objekt E2 die Koordinaten $x_2$, $y_2$ und das Objekt E3 die Positionskoordinaten $x_3$, $y_3$ auf.

Im Schritt 7 wird nun geprüft, ob die Objekte E1, E2 und E3 sich im Fahrkorridor F aufhalten. Wie ersichtlich, fährt das Objekt E3 außerhalb des Fahrkorridors F und wird bei der weiteren Betrachtung außer acht gelassen. Um nun festzustellen, welches Fahrzeug sich am nächsten dem zu regelnden Fahrzeug befindet, werden im Schritt 8 die Abstände der in Frage kommenden Regelfahrzeuge E1, E2 zum zu regelnden Fahrzeug K verglichen. Im vorliegenden Fall ist $y_1$ kleiner als $y_2$, d. h. das Objekt E1 befindet sich näher am Kraftfahrzeug K und wird somit im Schritt 9 als Regelobjekt betrachtet.

Nach Auswahl dieses Regelobjektes E1 wird die Abstandsregelung auf dieses Regelobjekt eingestellt. Danach wird wieder zum Schritt 6 übergegangen und mittels eines Radarstrahles die sich im Fahrkorridor befindenden Objekte detektiert. Anschließend wird im Schritt 10 überprüft, ob das Regelobjekt E1 sich weiterhin im Fahrkorridor F befindet. Ist dies der Fall, wird es weiterhin als Regelobjekt für die Abstandsregelung genutzt.

Wird im Schritt 10 festgestellt, daß sich das Regelobjekt E1 nicht mehr im Fahrkorridor aufhält, wird im Schritt 11 überprüft, ob das Regelobjekt E1 sich im Objektkorridor aufhält. Wird das Objekt E1 im Objektkorridor detektiert, so wird im Schritt 12 weiterhin auf das Regelobjekt E1 geregelt. Wird aber im Schritt 11 festgestellt, daß das Regelobjekt auch den Objektkorridor verlassen hat, fällt das Regelobjekt E1 aus der Betrachtungsweise für die Abstandsregelung. Es wird zur Objekterfassung im Schritt 6 zurückgekehrt, wo alle neu erfaßten Objekte auf die beschriebene Art und Weise überprüft und das Regelobjekt ausgewählt wird.

**Patentansprüche**

1. Verfahren zur Bestimmung eines Regelobjektes (E1), dessen Abstand zu einem nachfolgenden Fahrzeug (1) gemessen wird, wobei der Abstand zwischen Regelobjekt (E1) und dem Fahrzeug (1) auf einen Sollabstand eingeregelt wird, wenn sich das Regelobjekt (E1) in einem voraussichtlichen Fahrkorridor (F) des nachfolgenden Fahrzeuges befindet, **dadurch gekennzeichnet,** daß auch nach Verlassen des Fahrkorridors (F) durch das Regelobjekt (E1) der Abstand weiter auf dieses Regelobjekt (E1) geregelt wird, solange sich das Regelobjekt (E1) in einem Objektkorridor (O) aufhält, welcher breiter ist als der Fahrkorridor (F) des Fahrzeuges.

2. Verfahren nach Anspruch 1, **dadurch gekennzeichnet,** daß die Breite des Objektkorridors (O) entfernungsabhängig gewählt wird.

3. Verfahren nach Anspruch 1 oder 2, **dadurch gekennzeichnet,** daß der Objektkorridor (O) so breit ist, wie eine Fahrbahnbreite der Fahrbahn, auf welcher sich das Fahrzeug (1) bewegt.

4. Verfahren nach Anspruch 3, **dadurch gekennzeichnet,** daß der Fahrkorridor (F) schmaler ist, als die Fahrbahn des Fahrzeuges.

5. Verfahren nach einem der Ansprüche 1 bis 4, **dadurch gekennzeichnet,** daß das zu regelnde Fahrzeug (1) andere vorausfahrende Fahrzeuge (E1, E2, E3) drahtlos überwacht und aus den Fahrzeugen (E1, E2, E3), die auswählt, welche sich in seinem Fahrkorridor (F) befinden, wobei das Fahrzeug (1), das den geringsten Abstand zum regelnden Fahrzeug (1) aufweist, als Regelobjekt (E1) erkannt wird.

6. Verfahren nach Anspruch 1, **dadurch gekennzeichnet,** daß der Objektkorridor (O) aus dem Fahrkorridor (F) des zu regelnden Fahrzeuges (1) bestimmt wird.

7. Verfahren nach Anspruch 1, 5 und 6, **dadurch gekennzeichnet,** daß der vorausschauende Fahrkorridor (F) des Fahrzeuges (1) mit Hilfe der Eigengeschwindigkeit und der Gierrate bestimmt.

8. Verfahren nach Anspruch 7, **dadurch gekennzeichnet,** daß aus der von einem Gierratensensor gemessenen Gierrate des Fahrzeugs (1) der Fahrkorridor (F) des Fahrzeuges (1) bestimmt wird.

9. Verfahren nach Anspruch 7, **dadurch gekennzeichnet,** daß der Fahrkorridor (F) des Fahrzeuges (1) über den Kurvenradius bestimmt wird, der aus der Differenzgeschwindigkeit zweier Fahrzeugräder, insbesondere der Räder einer Achse, bestimmt wird.

10. Verfahren nach Anspruch 9, **dadurch gekennzeichnet,** daß die Radgeschwindigkeit der beiden Fahrzeugräder gemessen wird und aus der Differenz der beiden Radgeschwindigkeiten die Gierrate des Fahrzeuges bestimmt wird.

11. Anordnung zur Durchführung des Verfahrens nach Anspruch 1 mit einem Sensor (10) zur Überwachung der in Fahrtrichtung des Fahrzeugs (1) auftretenden Objekte (E1, E2, E3), und mit einer mit dem Sensor (10) verbundenen Sensorsignalverarbeitungsanordnung (11) zur Führung des Abstands und der Relativgeschwindigkeit der überwachten Objekte an eine Abstandsregeleinrichtung (12), die eine Einrichtung (12a) aufweist zur Bestimmung des Fahr - und Objektkorridors (O) des Fahrzeuges (1).

12. Anordnung nach Anspruch 11, **dadurch gekennzeichnet,** daß der Sensor (10) an der Vorderfront des Fahrzeuges (1) zur Überwachung des vorausfahrenden Regelobjektes (E1) angeordnet ist.

13. Anordnung nach Anspruch 11 oder 12, **dadurch gekennzeichnet,** daß der Sensor (10) nach dem Echoprinzip arbeitet.

14. Anordnung nach Anspruch 13, **dadurch gekennzeichnet,** daß der Sensor (3) ein Radarsensor ist.

15. Anordnung nach Anspruch 11, **dadurch gekennzeichnet,** daß die Abstandsregeleinrichtung (12) den Fahrkorridor (F) des Fahrzeuges (1) bestimmt und den Abstand zum Regelobjekt (E1) einstellt.

16. Anordnung nach Anspruch 11 und 15, **dadurch gekennzeichnet,** daß der Sensor (10), die Signalaufbereitungsanordnung (11) sowie die Abstandsregeleinrichtung (12) eine bauliche Einheit bilden.

## Claims

1. Method for determining a control object (E1) whose distance from a following vehicle (1) is measured, the distance between the control object (E1) and the vehicle (1) being adjusted to a desired distance if the control object (E1) is situated in an expected travelling corridor (F) of the following vehicle, **characterized in that** even after the control object (E1) has left the travelling corridor (F), the distance continues to be controlled with respect to this control object (E1) as long as the control object (E1) stays in an object corridor (O) which is wider than the travelling corridor (F) of the vehicle.

2. Method according to Claim 1, **characterized in that** the width of the object corridor (O) is chosen in a distance-dependent manner.

3. Method according to Claim 1 or 2, **characterized in that** the object corridor (O) is as wide as a roadway width of the roadway on which the vehicle (1) is moving.

4. Method according to Claim 3, **characterized in that** the travelling corridor (F) is narrower than the roadway of the vehicle.

5. Method according to one of Claims 1 to 4, **characterized in that** the vehicle (1) to be controlled monitors other vehicles (E1, E2, E3) travelling ahead in a wire-free manner and, from the vehicles (E1, E2, E3), selects those which are situated in its travelling corridor (F), the vehicle (1) which is at the smallest distance from the controlling vehicle (1) being identified as the control object (E1).

6. Method according to Claim 1, **characterized in that** the object corridor (O) is determined from the travelling corridor (F) of the vehicle (1) to be controlled.

7. Method according to Claims 1, 5 and 6, **characterized in that** the anticipated travelling corridor (F) of the vehicle (1) is determined with the aid of the intrinsic speed and of the yaw rate.

8. Method according to Claim .7, **characterized in that** the travelling corridor (F) of the vehicle (1) is determined from the yaw rate of the vehicle (1) which is measured by a yaw rate sensor.

9. Method according to Claim 7, **characterized in that** the travelling corridor (F) of the vehicle (1) is determined by way of the turn radius determined from the differential speed of two vehicle wheels, in particular the wheels of one axle.

10. Method according to Claim 9, **characterized in that** the wheel speed of the two vehicle wheels is measured and the yaw rate of the vehicle is determined from the difference between the two wheel speeds.

11. Arrangement for carrying out the method according to Claim 1 having a sensor (10) for monitoring the objects (E1, E2, E3) appearing in the direction of travel of the vehicle (1), and having a sensor signal processing arrangement (11), connected to the sensor (10), for passing the distance and the relative speed of the monitored objects to a distance control device (12) which has a device (12a) for determining the travelling and object corridor (O) of the vehicle (1).

12. Arrangement according to Claim 11, **characterized in that** the sensor (10) is arranged on the front of the vehicle (1) for the purpose of monitoring the control object (E1) travelling ahead.

13. Arrangement according to Claim 11 or 12, **characterized in that** the sensor (10) operates according to the echo principle.

14. Arrangement according to Claim 13, **characterized in that** the sensor (3) is a radar sensor.

15. Arrangement according to Claim 11, **characterized in that** the distance control device (12) determines the travelling corridor (F) of the vehicle (1) and sets the distance from the control object (E1).

16. Arrangement according to Claims 11 and 15, **characterized in that** the sensor (10), the signal conditioning arrangement (11) and the distance control device (12) form a structural unit.

## Revendications

1. Procédé permettant de définir un objet régulateur (E1) dont on mesure la distance par rapport à un véhicule suiveur (1), la distance entre l'objet régulateur (E1) et le véhicule (1) étant régulée à une valeur de consigne lorsque l'objet régulateur (E1) se trouve dans un couloir de circulation (F) prévisible du véhicule suiveur, caractérisé en ce que, même lorsque l'objet régulateur (E1) quitte le couloir de circulation (F), la distance continue à être régulée sur cet objet régulateur (E1) tant que l'objet régulateur (E1) demeure dans un couloir objet (O) qui est plus large que le couloir de circulation (F) du véhicule.

2. Procédé selon la revendication 1, caractérisé en ce que la largeur du couloir objet (O) est choisie de telle sorte qu'elle soit fonction de la distance.

**3.** Procédé salon la revendication 1 ou 2, caractérisé en ce que le couloir objet (O) a une largeur identique à celle de la voie de circulation de la voie de circulation sur laquelle se déplace le véhicule (1).

**4.** Procédé selon la revendication 3, caractérisé en ce que le couloir de circulation (F) est plus étroit que la voie de circulation du véhicule.

**5.** Procédé selon l'une des revendications 1 à 4, caractérisé en ce que le véhicule à réguler (1) surveille, sans fils, d'autres véhicules qui le précèdent (E1, E2, E3) et sélectionne parmi les véhicules (E1, E2, E3), ceux qui se trouvent dans son couloir de circulation (F), le véhicule (1) qui présente la distance la plus faible par rapport au véhicule régulateur (1) étant reconnu comme objet régulateur (E1).

**6.** Procédé selon la revendication 1, caractérisé en ce que le couloir objet (O) est défini à partir du couloir de circulation (F) du véhicule à réguler (1).

**7.** Procédé selon les revendications 1, 5 et 6, caractérisé en ce que le couloir de circulation (F) vers l'avant du véhicule (1) est défini à l'aide de la vitesse réelle et du taux de lacet.

**8.** Procédé selon la revendication 7, caractérisé en ce que le couloir de circulation (F) du véhicule (1) est défini à partir du taux de lacet du véhicule (1) mesuré à l'aide d'un capteur de taux de lacet.

**9.** Procédé selon la revendication 7, caractérisé en ce que le couloir de circulation (F) du véhicule (1) est défini sur le rayon du virage qui est défini à partir de la vitesse différentielle de deux roues du véhicule, en particulier des roues d'un axe.

**10.** Procédé selon la revendication 9, caractérisé en ce qu'on mesure la vitesse de roue des deux roues du véhicule et qu'à partir de la différence de vitesse des deux roues, on définit le taux de lacet du véhicule.

**11.** Dispositif pour réaliser le procédé selon la revendication 1 avec un capteur (10) pour surveiller les objets (E1, E2, E3) survenant dans le sens de circulation du véhicule (1), et avec un dispositif de traitement du signal du capteur (11) relié au capteur (10) pour le contrôle de la distance et de la vitesse relative des objets surveillés et un équipement de régulation de la distance (12) qui présente un équipement (12a) pour définir les couloirs de circulation et objet (O) du véhicule (1).

**12.** Dispositif selon la revendication 11, caractérisé en ce que le capteur (10) est disposé sur la face avant du véhicule (1) pour surveiller l'objet régulateur (E1) circulant à l'avant.

**13.** Dispositif selon la revendication 11 ou 12, caractérisé en ce que le capteur (10) fonctionne selon le principe de l'écho.

**14.** Dispositif selon la revendication 13, caractérisé en ce que le capteur (3) est un capteur radar.

**15.** Dispositif selon la revendication 11, caractérisé en ce que l'équipement de régulation de la distance (12) définit le couloir de circulation (F) du véhicule (1) et règle la distance à l'objet régulateur (E1).

**16.** Dispositif selon les revendications 11 et 15, caractérisé en ce que le capteur (10), le dispositif de traitement du signal (11) ainsi que l'équipement de régulation de la distance (12) constituent une unité constructive.

Fig. 1

EP 1 007 384 B1

# Fig. 2

Fig. 3

Fig. 4

Fig. 5